# EUROPÄISCHE PATENTANMELDUNG

(11) **EP 1 795 499 A2**
(43) Veröffentlichungstag der Anmeldung: **13.06.2007**
(21) Anmeldenummer: 06021344.4
(22) Anmeldetag: 11.10.2006
(51) Int. Cl.: C01B 3/34

(54) **Reformeranordnung, System mit dieser Reformeranordnung und Verfahren zum Betreiben einer Reformeranordnung**

(30) Priorität: 08.12.2005 DE 102005058530
(71) Anmelder: J. Eberspächer GmbH & Co. KG, 73730 Esslingen (DE)
(72) Erfinder: Eberspach, Günter, Dipl.-Ing., 72469 Wolfschlugen (DE); Kaupert, Andreas, Dipl.-Ing., 73730 Esslingen (DE)
(74) Vertreter: Sawodny, Michael-Wolfgang

(57) **Zusammenfassung**

Die Erfindung betrifft eine Reformeranordnung zur Wasserstoffgewinnung aus einem zersetzbaren Kohlenwasserstoff/Mischmaterial-Gemisch, ein Funktionssystem aus einer Reformeranordnung und einem Wasserstoff verbrauchenden System sowie ein Verfahren zum Betreiben einer Reformeranordnung.

Die erfindungsgemäße Lösung ist dadurch charakterisiert, dass Brennstoff während des Betriebes nicht mehr direkt der Verdampferanordnung der Reformeranordnung zugeführt wird sondern zur Vermeidung eines Auskondensierens und Verbesserung der homogenen Gemischbildung bereits vor der Reformeranordnung in vorerwärmtem Gas in Form von Luft und Rezirkulat aus Rückläufen aus Funktionssystemen verdampft wird und das somit gebildete Kohlenwasserstoff/Mischmaterial-Gemisch der Gemischbildungszone zugeführt wird, wobei die Hauptfunktion der Gemischbildungszone in der Homogenisierung des Gemisches besteht.

## Beschreibung

Die Erfindung betrifft eine Reformeranordnung zur Wasserstoffgewinnung aus einem zersetzbaren Kohlenwasserstoff/Mischmaterial-Gemisch, im Einzelnen mit den Merkmalen aus dem Oberbegriff des Anspruches 1; ein Funktionssystem aus einer Reformeranordnung und einem Wasserstoff verbrauchenden System sowie ein Verfahren zum Betreiben einer Reformeranordnung.

Reformeranordnungen werden dazu eingesetzt, um in einer katalytischen Reaktion Kohlenwasserstoffe oder kohlenwasserstoffhaltige Materialien aufzuspalten und dabei Wasserstoff freizusetzen. Der so gewonnene Wasserstoff kann beispielsweise in Brennstoffzellen zur Erzeugung elektrischer Energie oder in Abgasführungssystemen einer Verbrennungskraftmaschine zur Abgasaufbereitung genutzt werden. Um mit dem, einem Katalysatormaterial zugeleiteten Gemisch eine katalytische Reaktion starten und aufrechterhalten zu können, ist es erforderlich, den Bereich des Reformers, also im Wesentlichen die mit dem Gemisch in Kontakt tretenden Baugruppen und das Katalysatormaterial, ebenso wie das Gemisch auf eine bestimmte Betriebstemperatur zu bringen. Zur Erzeugung des Gemisches aus Brennstoff in Form eines flüssigen Kohlenwasserstoffes oder einer kohlenwasserstoffhaltigen Flüssigkeit ist eine Verdampfungsanordnung zur Erzeugung eines in einem Reformer zur Wasserstoffgewinnung zersetzbaren Kohlenwasserstoff/Luft-Gemisches vorgesehen, in welcher der Brennstoff verdampft wird, wobei in der anschließenden Gemischbildungszone Luft über eine Zufuhrleitung zugeführt wird und mit dem verdampften Kohlenwasserstoff vermischt wird. Das so entstehende Kohlenwasserstoff/Mischmaterial-Gemisch wird in einem Katalysator einer katalytischen Reaktion zur Freisetzung von Wasserstoff unterzogen. Derartige Reformeranordnungen sind in einer Vielzahl von Ausführungen aus dem Stand der Technik bekannt. Stellvertretend wird auf EP 1 354 852 A2 verwiesen. Dabei wird der Brennstoff im kalten Zustand der Reformeranordnung zugeführt und an der Verdampferanordnung verdampft. Aufgrund der kalten Zudosierung des Brennstoffes in die Verdampferanordnung kondensiert dieser aus, was insbesondere bei Zündung zu unerwünschter Rußbildung führt. Ferner ist die Homogenität des Kohlenwasserstoff/Mischmaterial-Gemisches oft nicht befriedigend.

Der Erfindung lag daher die Aufgabe zugrunde eine Reformeranordnung der eingangs genannten Art derart weiterzuentwickeln, dass die genannten Nachteile vermieden werden, insbesondere ein Auskondensieren von Brennstoff. Die erfindungsgemäße Lösung soll sich dabei durch einen geringen konstruktiven und steuerungstechnischen Aufwand auszeichnen.

Die erfindungsgemäße Lösung ist durch die Merkmale der Ansprüche 1, 23 und 34 charakterisiert. Vorteilhafte Ausgestaltungen sind in den Unteransprüchen wiedergegeben.

Reformeranordnungen zur Erzeugung von Wasserstoff aus einem Kohlenwasserstoff/Mischmaterial-Gemisch, wobei das Mischmaterial externe und internen Prozessabgasen, Luft oder Wasserdampf umfassen kann. Die Reformeranordnung umfasst eine Gemischbildungszone. Diese wird von einer Mischkammer, vorzugsweise einer kombinierten Brenn-/Mischkammer gebildet. Erfindungsgemäß umfasst die Gemischbildungszone eine Eintrittsöffnungsanordnung für ein Kohlenwasserstoff/Mischmaterial-Gemisch, welche mit wenigstens einer erwärmtes Gas oder/und Dampf führenden Leitung verbindbar ist, wobei der Gas oder/und Dampf führenden Leitung oder einer mit dieser koppelbaren Leitung Mittel zur Einbringung von Brennstoff in Form von flüssigem Kohlenwasserstoff oder einer kohlenwasserstoffhaltigen Flüssigkeit außerhalb der Gemischbildungszone zugeordnet sind.

Mit der erfindungsgemäßen Lösung wird die Gemischbildung von Brennstoff und Mischmaterial bereits vor der Reformeranordnung vorgenommen und das entstandene Gemisch der Gemischbildungszone zugeführt. Je nach Ausführung der Reformeranordnung und Integration in Funktionssystemen muss dieses somit für einen erheblichen Teil des theoretisch möglichen Betriebsbereiches der Reformeranordnung nicht in der Reformeranordnung selbst gebildet werden, wobei aufgrund der Einbringung in erwärmtes Gas oder/und Dampf führende Leitung der Brennstoff nicht mehr in das kalte Gas eingebracht wird und somit ein unerwünschtes Auskondensieren des Brennstoffes in der Gemischbildungszone vermieden werden kann. Die externe Kraftstoffzudosierung verlängert die Mischstrecke und erhöht die Homogenisierung des bei Einbringung entstandenen Kohlenwasserstoff/Mischmaterial-Gemisches.

Für die Einbringung des Brennstoffes bestehen eine Mehrzahl von Möglichkeiten, die über entsprechende Mittel realisiert werden, welche entweder eine Direkteinspritzung des Brennstoffes vorsehen oder eine Zugabe von Brennstoff über in der jeweiligen Gas führenden Leitung angeordnete Verdampfer und Fördereinheiten, beispielsweise Dosierpumpen ermöglichen. Denkbar sind beispielsweise der Einsatz von Einspritz- bzw. Zerstäuberdüsen, Ultraschallzerstäubern, Einstoff - oder Zweistoffdüsen, Rotationszerstäubern, elektrostatischen Zerstäubern oder Mikrowellenzerstäubern. Die konkrete Wahl richtet sich dabei nach den Gegebenheiten am Ort der Zudosierung.

Die Reformeranordnung umfasst ferner eine Verdampferanordnung zur Erzeugung des Kohlenwasserstoff/Mischmaterial-Gemisches. Die Verdampferanordnung umfasst eine Kohlenwasserstoffverdampfungseinrichtung, welche mindestens ein poröses Verdampfungsmedium aufweist und die Gemischbildungszone, der eine Eintrittsöffnungsanordnung für das Mischmaterial in Form von Luft oder/und Wasserdampf und/oder externe und/oder internen Prozessabgasen zugeordnet ist. Die Eintrittsöffnungsanordnung für Luft oder/und Wasserdampf ist mit mindestens einer Zufuhrleitung für Luft oder/und Wasserdampf verbindbar. Ferner ist im Bereich der Verdampferanordnung eine Eintrittsöffnungsanordnung für Brennstoff vorgesehen, welche mit einer Brennstoffzufuhr gekoppelt ist.

Stromabwärts der Gemischbildungszone ist ein Katalysator zur Zersetzung des Kohlenwasserstoff/Mischmaterial-Gemisches angeordnet. Für das Kohlenwasserstoff/Mischmaterial-Gemisch und für die Luft oder/und Wasserdampf und/oder interne un/oder externe Prozessabgase können dabei
a) separate Eintrittsöffnungsanordnungen an der Gemischbildungszone, welche in der Regel von einer Mischkammer gebildet wird oder aber
b) eine gemeinsame Eintrittsöffnungsanordnung vorgesehen werden, wobei die Eintrittsöffnungsanordnung für das Kohlenwasserstoff/Mischmaterial-Gemisch dann von der Eintrittsöffnungsanordnung für Luft oder/und Wasserdampf und/oder interne und/oder externe Prozessabgase gebildet wird.

Der Fall a) erlaubt die spezielle Auslegung hinsichtlich der einzelnen Funktionen, während Fall b) durch eine Funktionskonzentration und damit einen geringeren Aufwand, keine oder nur geringfügige zusätzliche baulichen Maßnahmen sowie eine kürzere Baulänge in axialer Richtung charakterisiert ist. Die Ausführung gemäß b) erlaubt ferner
b1) das Vorsehen wenigstens zweier unabhängiger Leitungen, wobei in diesem Fall zwischen der Eintrittsöffnungsanordnung und der Gas oder/und Dampf und/oder interne und/oder externe Prozessabgase führenden Leitung und der Zufuhrleitung Mittel zur wenigstens wahlweisen, vorzugsweise auch gemeinsamen Koppelung der Gas oder/und Dampf und/oder interne und/oder externe Prozessabgase führenden Leitung und der Zufuhrleitung für Luft oder/und Wasserdampf und/oder interne und/oder externe Prozessabgase angeordnet sind oder
b2) die Ausbildung der Gas oder/und Dampf führenden Leitung und der Zufuhrleitung für Luft oder/und Wasserdampf in einer bzw. als eine Leitung, wobei die Gas oder/und Dampf führende Leitung im einfachsten Fall von der ohnehin vorzusehenden Zufuhrleitung für Luft oder/und Wasserdampf gebildet wird.

Variante b2) ermöglicht somit einen hohen Grad an Funktionskonzentration mit einfachen Mitteln ohne das Vorsehen zusätzlicher Komponenten, insbesondere Leitungssystemen gegenüber dem Stand der Technik.

Um ein Auskondensieren bereits bei der Gemischbildung weitestgehend, vorzugsweise vollständig zu vermeiden, wird der Brennstoff in vorgewärmtes Gas oder Dampf eingebracht. Um eine problem- und vorallem rückstandslose Verdampfung des Brennstoffes bereits vor der Gemischbildungszone zu gewährleisten, erfolgt die Verdampfung bei Temperaturen von T > 240°C, vorzugsweise T > 350°C frei von einer Berührung des Brennstoffes mit kalten Wänden, d.h. die Umgebung der Gemischbildung außerhalb der Gemischbildungszone weist diese Temperaturen von T> 240°C, vorzugsweise > 350°C auf, um über der Siedetemperatur des Brennstoffes beispielsweise von Dieselkraftstoff zu liegen. Dazu bestehen ebenfalls eine Mehrzahl von Möglichkeiten:
1.) Zuordnung einer Vorwärmeinrichtung zu der Gas oder/und Dampf und/oder interner und/oder externe Prozessabgase führenden Leitung oder der mit dieser gekoppelten Leitung
   1.1) extern oder
   1.2) in der Reformeranordnung integriert
   oder
2.) Einbringung von Brennstoff in Rezirkulate, welche in die Gas oder/und Dampf führende Leitung durch Koppelung mit den die Rezirkulate führenden Leitungssystemen eingebracht werden, wobei die Rezirkulate bereits eine entsprechend hohe Temperatur aufweisen oder aber einer Erwärmung über eine externe oder interne Wärmequelle unterzogen werden.

Die Vorwärmeinrichtung gemäß 1.1) kann eine separate Heizquelle in Form einer außerhalb der Reformeranordnung angeordneten Heizquelle umfassen oder gemäß 1.2) eine in der Reformeranordnung angeordnete Heizquelle, wobei hier insbesondere die bei der katalytischen Reaktion freigegebene Wärme genutzt wird. Dazu umfasst die Reformeranordnung eine Wärmeübertragungseinheit, wobei die Gas oder/und Dampf und/oder externe und/oder interne Restgase führende Leitung über die Wärmeübertragungseinheit, insbesondere einen Wärmetauscher zur Gemischbildungszone geführt wird und das in der Leitung geführte Gas entweder direkt oder indirekt durch Wärmedurch- und Übergang erwärmt wird. In diesem Fall sind die Mittel zur Einbringung von Brennstoff zwischen der Wärmeübertragungseinheit und der Eintrittsöffnungsanordnung an der Gemischbildungszone angeordnet oder der Brennstoff wird in die vorerwärmtes Gas oder/und Dampf und/oder internes und/oder externes Restgas führende Leitung eingespeist und das Gemisch an der Wärmeübertragungseinheit erwärmt. Eine weitere Variante stellt eine Wärmetauscheranordnung stromabwärts der Reformeranordnung dar, in welcher die Prozessluft und Rezirkulationsgase für die Reformierung vorgewärmt werden. Anschließend wird der Kraftstoff zu den warmen Gase zugegeben.

Das Kohlenwasserstoff/Mischmaterial-Gemisch wird mit der erfindungsgemäßen Lösung vor bzw. außerhalb der Gemischbildungszone und damit der Mischkammer oder der kombinierten Brenn-/Mischkammer erzeugt und in diese eingebracht, wobei die Hauptfunktion der Gemischbildungszone während des Betriebes der Reformeranordnung nunmehr nur noch in der Verbesserung der Homogenisierung des Kohlenwasserstoff/Mischmaterial-Gemisches besteht. Durch die bereits an anderer Stelle erfolgende Einbringung von Brennstoff kann das Prinzip der kalten Flamme zur Aufbereitung langkettiger Kohlenwasserstoffe verwendet werden. Die kalte Flamme kann sowohl in der Gemischbildungszone als auch am Ort der Brennstoffeinbringung in die Gas oder/und Dampf und/oder interne und/oder externes Restgas führende Leitung oder eine mit dieser verbundenen Gas führenden Leitung erfolgen.

Gemäß einer besonders vorteilhaften Ausführung wird dazu zur Vermeidung von Vorreaktionen die Einbringung von Brennstoff und Erwärmung des Gases in der Gas oder/und Dampf führenden Leitung gemäß der Ausführung 1.2) genutzt.

Für eine Ausführung gemäß 2.) bestehen eine Vielzahl von Möglichkeiten, welche insbesondere von der Art des Funktionssystems, in welchem die Reformeranordnung zum Einsatz gelangt, abhängig sind. Dabei wird die Gas oder/und Dampf führende Leitung mit Gas oder/und Dampf führenden Leitungen externer Systeme oder eines mit der Reformeranordnung verbundenen Wasserstoff verbrauchenden Systems, insbesondere Brennstoffzellensystems verbunden oder von diesen gebildet.

Wird das Wasserstoff verbrauchende System von einer Brennstoffzelle gebildet, wird eine Austrittsöffnungsanordnung für das Reformat, in der Regel Wasserstoff, an der Reformeranordnung mit der Brennstoffzelle, insbesondere einer Eintrittsöffnungsanordnung an dieser verbunden. Die Brennstoffzelle umfasst eine Austrittsöffnungsanordnung für Anodenabgas, welche mit wenigstens einer Leitung zur Führung des Anodenabgases verbunden ist. Der Brennstoffzelle ist vorzugsweise eine Brenneranordnung in Form eines Restgasbrenners nachgeordnet, welche mit der Leitung zur Führung des Anodenabgases koppelbar ist und die eine Austrittsöffnungsanordnung zur Koppelung mit einer Abgasleitung umfasst. In Betrieb der Brennstoffzelle ist das Anodenabgas H₂ oder CO abgereichtes Reformat. Im Restgasbrenner kann beispielsweise der im Anodenabgas vorhandene Wasserstoff verbrannt werden.

Als vorerwärmtes Gas führende Leitung des Funktionssystems kann dabei sowohl die Anodenabgas führende Leitung als auch die Abgasleitung des Restgasbrenners fungieren. Die Leitung zur Führung des Anodenabgases ist im ersten Fall identisch mit der Gas oder/und Dampf und/oder externen und/oder internen Prozessgas führenden Leitung oder mit dieser verbindbar. Die Mittel zur Einbringung von Brennstoff sind dabei entweder
a) der Leitung zur Führung des Anodenabgases oder
b) einer mit dieser gekoppelten Gas oder/und Dampf und/oder externen und/oder internen Prozessgases führenden Leitung bzw. der Zufuhrleitung für Luft oder/und Dampf und/oder externen und/oder internen Prozessgases zugeordnet.

Im zweiten Fall ist die Abgasleitung mit der Gas oder/und Dampf führenden Leitung verbindbar oder bildet diese. Die Mittel zur Einbringung von Brennstoff sind dabei entweder
a) der Leitung zur Führung des Abgases oder
b) einer mit dieser gekoppelten Gas oder/und Dampf führenden Leitung bzw. der Zufuhrleitung für Luft oder/und Dampf zugeordnet.

Beide Möglichkeiten können auch parallel genutzt werden.

Das erfindungsgemäße Verfahren zum Betreiben der Reformeranordnung ist durch zwei Betriebsphasen charakterisiert. Während einer ersten Betriebsphase (I) wird Brennstoff der Verdampferanordnung zugeführt und verdampft, wobei über die Zufuhrleitung Luft in die Gemischbildungszone eingebracht wird und mit dem an der Verdampferanordnung verdampften Brennstoff unter Bildung eines Kohlenwasserstoff/Mischmaterial-Gemisches in der Gemischbildungszone vermischt und verbrannt wird. Die Gemischbildungszone ist dabei in der Brenn-/Mischkammer angeordnet. In einer zweiten Betriebsphase (II) wird die Brennstoffzufuhr zur Verdampferanordnung wenigstens teilweise, vorzugsweise vollständig abgebrochen und der Brennstoff in die erwärmtes Gas oder/und Dampf und/oder externes und/oder internes Restgas führende Leitung unter Bildung eines Kohlenwasserstoff/Mischmaterial-Gemisches eingebracht, das der Gemischbildungszone zugeführt wird. Die Einbringung kann beispielsweise durch Einsprühen oder über eine in der Gas führenden Leitung angeordnete Verdampferanordnung erfolgen.

Wird die Reformeranordnung in einem Funktionssystem eingesetzt, erfolgt die Einbringung des Brennstoffes in eine warmes Gas beispielsweise eine Rezirkulat führende Leitung, welche mit der Zufuhrleitung für Luft oder/und Wasserdampf und/oder externen und/oder internen Restgas verbindbar ist.

Die erfindungsgemäße Reformeranordnung und das erfindungsgemäße Verfahren sind für den Einsatz in Funktionssystemen in Form von Brennstoffzellen geeignet. Eine besonders vorteilhafte Anwendung erfolgt bei so genannten oxidkeramischen Brennstoffzellen (SOFC).

Bezüglich der konstruktiven Ausgestaltung des Reformers bestehen eine Vielzahl von Möglichkeiten. Vorzugsweise werden Ausführungen mit kurzer axialer Baulänge gewählt. Gemäß einer besonders vorteilhaften Ausführung umfasst die Reformeranordnung zwei ineinander unter Bildung und Abgrenzung zweier Hohlräume angeordneter bzw. gesteckter Hohlelemente, vorzugsweise hohlzylindrischer bzw. rohrförmiger Elemente. Der innere Hohlraum ist dabei mit einer Brennstoffzufuhr verbunden. Die diesen umschließende Wand trägt eine Verdampfereinrichtung, welche beispielsweise als Vliesverdampfer ausgeführt ist. Der Hohlraum bildet ferner die Gemischbildungszone bzw. kombinierte Brenn-/Mischkammer, welche dem Verdampfer nachgeordnet ist. An der diesen umschließenden Wand sind auch die Flammsperre sowie der Katalysator gelagert. Dem Katalysator nachgeordnet ist eine Austrittsöffnungsanordnung für das Reformat. Der äußere Hohlraum wird von dem hohlzylindrischen Element, welches das die Verdampferanordnung, Brenn-/Mischkammer und Katalysator umfassende hohlzylindrische Element umschließt, gebildet. In diesen münden sowohl die Zufuhrleitung für Luft oder/und Wasserdampf und/oder internes und/oder externes Prozessgas und die erwärmtes Gas oder/und Dampf und/oder internes und/oder externes Prozessgas führende Leitung. Des Weiteren sind diesem die Mittel zur Einbringung von Brennstoff zugeordnet. Vorzugsweise weist der Außenmantel des zweiten hohlzylindrischen Elementes eine Eintrittsöffnungsanordnung auf, die mit der erwärmtes Gas und/oder Dampf und/oder internes und/oder externes Prozessgas bzw. Prozessabgas führenden Leitung sowie der Zufuhrleitung für Luft oder/und Wasserdampf und/oder internes und/oder externes Prozessgas gekoppelt ist. Die aus diesen Leitungen eingebrachten Gase umströmen dabei zumindest einen Teil des Außenumfanges des inneren hohlzylindrischen Elementes und werden über eine Eintrittsöffnungsanordnung, welche sich vorzugsweise gleichmäßig über den Außenumfang des ersten hohlzylindrischen Elementes erstreckt in die Gemischbildungszone eingebracht. Die Mittel zur Brennstoffzufuhr umfassen im einfachsten Fall eine Brennstoffzufuhr, insbesondere Brennstoffzufuhrleitung, die in eine im Hohlraum zwischen innerem und äußeren hohlzylindrischen Element angeordnete weitere zweite Verdampferanordnung mündet. Vorzugsweise ist diese zweite Verdampferanordnung als Vliesverdampfer ausgeführt und am Außenumfang des inneren hohlzylindrischen Elementes angeordnet bzw. umschließt dieses in Umfangsrichtung. Die Mittel sind dabei jedoch im Führungsbereich des erwärmten Gases im äußeren Hohlraum angeordnet und der Eintrittsöffnungsanordnung zur Gemischbildungszone vorgeordnet.

Die erfindungsgemäße Lösung wird nachfolgend anhand von Figuren erläutert. Darin ist im Einzelnen folgendes dargestellt:
- Figuren 1a bis 1c: verdeutlichen in schematisiert vereinfachter Darstellung Grundvarianten erfindungsgemäß ausgeführter Reformeranordnungen zur Erzeugung von Wasserstoff aus einem Kohlenwasserstoff/Mischmaterial-Gemisch;
- Figur 2: verdeutlicht anhand eines Signalflußbildes den Ablauf eines erfindungsgemäßen Verfahrens;
- Figur 3: verdeutlicht in schematisiert vereinfachter Darstellung mögliche Stoffströme in einem System aus Reformeranordnung und Brennstoffzelle;
- Figur 4: verdeutlicht anhand von Figur 3 die Möglichkeit der Brennstoffzufuhr über das Rezirkulat aus einem Restgasbrenner in die Zufuhrleitung für Luft in die Gemischbildungszone;
- Figur 5: verdeutlicht anhand von Figur 3 die Möglichkeit der Brennstoffzufuhr über das Rezirkulat Anodenabgas in die Zufuhrleitung für Luft in die Gemischbildungszone;
- Figur 6: verdeutlicht anhand von Figur 3 die Möglichkeit der Brennstoffzufuhr über das Gemisch aus Rezirkulat und Luft innerhalb des Reformers in die Zufuhrleitung für Luft in die Gemischbildungszone;
- Figur 7: verdeutlicht anhand eines Axialschnittes eine konstruktive Ausführung gemäß Figur 6.
- Figur 8: verdeutlicht eine Ausführung gemäß Figur 6 mit Einbringung des Brennstoffes hinter der Wärmeübertragungseinheit.

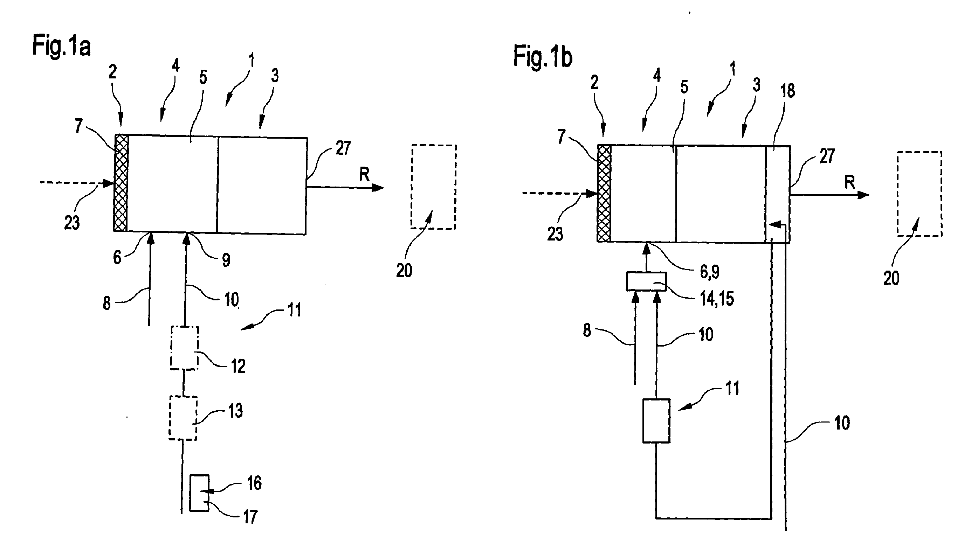

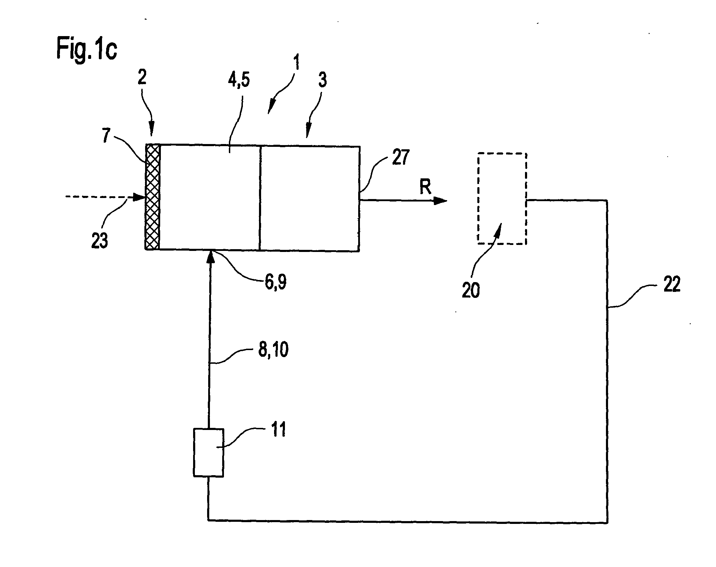

Die Figuren 1a bis 1c verdeutlichen in schematisiert vereinfachter Darstellung Grundvarianten erfindungsgemäß ausgeführter Reformeranordnungen 1 zur Erzeugung von Wasserstoff aus einem Kohlenwasserstoff/Mischmaterial-Gemisch. Diese umfasst eine Verdampferanordnung 2 zur Erzeugung des Kohlenwasserstoff/Mischmaterial-Gemisches und einen Katalysator 3, in welchem das entstandene Kohlenwasserstoff/Mischmaterial-Gemisch zersetzt wird. Die Verdampfungsanordnung 2 umfasst einen Verdampferbereich 4, welcher eine Gemischbildungszone 5 aufweist, die von einer Mischkammer oder einer kombinierten Brenn-/Mischkammer begrenzt wird und in welche Luft oder/und Wasserdampf und/oder internes und/oder externes Prozessgas über eine Eintrittsöffnungsanordnung 6 eintritt sowie eine Kohlenwasserstoffverdampfungseinrichtung 7, welche ein poröses Verdampfungsmedium aufweist. Das poröse Verdampfungsmedium wird beispielsweise von Vliesmaterial oder sonstigem Gewebe oder mattenartigem Material, Schaumkeramik gebildet. Die Mischkammer ist vorzugsweise als kombinierte Brenn-/Mischkammer ausgeführt. Die Eintrittsöffnungsanordnung 6 ist mit wenigstens einer Zufuhrleitung 8 für Luft und/oder Wasserdampfhaltigem Gas und/oder externes und/oder internes Prozessgas verbunden. Erfindungsgemäß ist wenigstens eine Eintrittsanordnung 9 zum Eintritt eines Kohlenwasserstoff/Mischmaterial-Gemisches in die Gemischbildungszone 5 vorgesehen, wobei die Eintrittsanordnung 9 mit einer ein Gas und oder Dampf und/oder externes und/oder internes Prozessgas führenden Leitung 10 verbunden ist. Bei dieser Gas und/oder Dampf und/oder externes und/oder internes Prozessgas führenden Leitung handelt es sich um eine Leitung zur Führung eines gasförmigen Mediums, welcher Mittel 11 zur Einbringung eines als Kohlenwasserstoff vorliegenden Brennstoffes zugeordnet sind. Die Mittel 11 sind in der Regel als Dosiersystem beispielsweise als Einspritzdüse 12 bevorzugt mit Fördereinrichtung und Absperrfunktion, hier beispielhaft strichpunktiert dargestellt ausgebildet, mittels welcher der Brennstoff in das in der Leitung 10 geführte Gas direkt eingebracht bzw. eingespritzt wird oder eine in der Gas oder Dampf führenden Leitung 10 angeordnete Verdampfungsanordnung 13, welche hier beispielhaft mit unterbrochener Linie und nur zur Verdeutlichung zusätzlich zur Einspritzdüse 12 wiedergegeben ist.

Der Begriff Leitung ist dabei funktional zu verstehen und schließt jegliche konstruktive Ausführung zur Führung von gasförmigen Medien mit ein, d.h. separate Leitungen in Form von Rohren, Schläuchen, als auch in Form von Kanälen.

Bei der Gas oder Dampf führenden Leitung 10 handelt es sich bevorzugt um eine Rezirkulationsgasleitung eines mit der Reformeranordnung gekoppelten Systems beziehungsweise einer prozessgasführende Komponente der Brennstoffzellenanordnung oder eines von diesem unabhängigen, warmes Abgas zur Verfügung stellendes System. Dabei kann die Zufuhrleitung für Luft zum Reformer entweder von der Rezirkulationsgasleitung gebildet werden oder es wird jeweils eine separate Luft- und eine Gas, insesondere eine Rezirkulationsgasleitung vorgesehen.

Gemäß Figur 1a werden die Zufuhrleitungen 8 für Luft und/oder Wasserdampf und die Gas oder Dampf und/oder externes oder internes Prozessgas führende Leitung 10 sowie die mit diesen koppelbaren Eintrittsöffnungsanordnungen 6 und 9 zur Gemischbildungszone 5 jeweils von separaten konstruktiven Elementen gebildet, d.h. es liegt eine klare Funktionstrennung vor, die sich auch konstruktiv widerspiegelt.

Zum Start des Systems ist eine mit einer Brennstoffzufuhr 23 koppelbare Eintrittsöffnungsanordnung für Brennstoff beispielsweise Kraftstoff an der Verdampferanordnung 2 vorgesehen. Die Reformeranordnung 1 umfasst ferner eine Austrittsöffnungsanordnung 27 für Reformat R, welche mit einem Wasserstoff verbrauchenden System 20 koppelbar ist. Das Reformat R wird in der Reformeranordnung durch Umsetzung des Kraftstoff/Luft/Wasser/Rezirkulat-Gemisches erhalten. Das Reformat ist ein wasserstoffhaltiges Gas, das im Betrieb in der Brennstoffzelle zu Strom gewandelt wird.

Demgegenüber verdeutlicht Figur 1b eine Weiterentwicklung gemäß Figur 1a mit gemeinsamer Nutzung der Eintrittsanordnung 6 durch die Möglichkeit der wahlweisen oder auch gemeinsamen Ankoppelung der Zufuhrleitung 8 für Luft und/oder Wasserdampf und der Gas oder Dampf und/oder internes oder externes Restgas führenden Leitung 10 an nur eine Eintrittsöffnungsanordnung 9. Dies wird über Mittel 14 zur zumindest wahlweisen Koppelung der Zufuhrleitung 8 und der Gas oder Dampf führenden Leitung 10 an die Eintrittsöffnungsanordnung 9 gewährleistet, welche in Form eines einfachen T-Stückes bzw. Umschalt- bzw. Mischventils 15, beispielhaft in Form eines 2/2-Wegeventiles vorliegen können. In diesem Fall wird die Eintrittsöffnungsanordnung 9 für das Kohlenwasserstoff/Mischmaterial-Gemisch von der Eintrittsöffnungsanordnung 6 gebildet.

Figur 1c verdeutlicht eine Weiterentwicklung gemäß Figur 1a und 1b mit besonders hoher Funktionskonzentration, bei welcher sowohl die Eintrittsöffnungsanordnungen 6 und 9 von einer gemeinsam genutzten Eintrittsöffnungsanordnung 9 gebildet werden als auch die Funktionen von Zufuhrleitung 8 und Gas oder Dampf führender Leitung 10 von Zufuhrleitung 8 oder Leitung 10 für beide übernommen werden, d.h. die Gas oder Dampf führende Leitung 10 wird von der Zufuhrleitung 8 gebildet oder umgekehrt. Die in der Zufuhrleitung 8 geführte Luft kann als Mischmaterial genutzt werden.

Um Russbildung zu vermeiden, wird der in Form von Kohlenwasserstoff vorliegende Brennstoff erfindungsgemäß nicht in kaltes sondern in erwärmtes Gas oder Dampf und/oder internes und/oder externes Restgaseingebracht. Die Vorerwärmung kann dabei auf unterschiedliche Art und Weise erfolgen, wobei jede der nachfolgend genannten Möglichkeiten, welche beispielhaft jeweils in einer der Figuren 1a bis 1c wiedergegeben sind, auch für die in den anderen Figuren beschriebenen Ausführungen genutzt werden können. Welche der Möglichkeiten Verwendung findet, richtet sich dabei insbesondere nach dem Einsatzgebiet der Reformeranordnung 1 und der genutzten Rezirkulate. So ist es denkbar als Vorwärmeinrichtung 16 eine externe Wärmequelle 17 zu nutzen, welche unabhängig vom Einsatzgebiet der Reformeranordnung 1 eingesetzt wird und nur zur Erwärmung dient. Diese ist beispielhaft in Figur 1a dargestellt. Dabei kann es sich um eine speziell für diesen Zweck ansteuerbare Heizeinrichtung, beispielseise eine elektrische Heizeinrichtung handeln.

Figur 1b verdeutlicht eine Ausführung mit prozessinterner Nutzung der Abwärme aus der Reformeranordnung 1. In diesem Fall umfasst die Reformeranordnung 1 eine, dem Katalysator 3 stromabwärts nachgeordneten Wärmeübertragungseinheit 18, vorzugsweise in Form eines Wärmetauschers, über welchen die Leitung 10 vor Eintritt bzw. Ankoppelung an die Gemischbildungszone 5 geführt wird. Bezüglich der konstruktiven Ausführung der Wärmeübertragungseinheit 18 bestehen keine Beschränkungen.

Demgegenüber verdeutlicht Figur 1c eine besonders vorteilhafte Ausführung mit Nutzung der Abwärme aus einem mit der Reformeranordnung 1 gekoppelten Wasserstoff verbrauchenden System 20, vorzugsweise in Form eines Brennstoffzellensystems 21, oder einem Hochtemperatur-Wärmetauscher eines Brennstoffzellensystems. Dazu wird wenigstens eine, erwärmtes Abgas führende Leitung 22 mit der Gas oder Dampf führenden Leitung 10, bei Zusammenfassung der Funktionen in einer Leitung, insbesondere der Zufuhrleitung 8 für Luft mit dieser koppelbar ausgeführt, beispielsweise über eine Ventilanordnung oder aber direkt mit dieser gekoppelt ausgeführt, wobei jedoch zur Steuerung der Strömungsmedienströme ebenfalls entsprechende Stelleinrichtungen, vorzugsweise in Form von Ventilanordnungen vorgesehen sind.

Theoretisch denkbar, hier jedoch nicht dargestellt, ist auch die Nutzung der Abwärme aus einem anderen, nicht prozesstechnisch mit der Reformeranordnung 1 verbundenen System. Bei diesem kann es sich beispielsweise um ein anderes in einem Fahrzeug oder einer stationären Einrichtung vorliegendes und während des Betriebes Wärme abgebendes System handeln. Es ist jedoch dann die zeitliche Überschneidung von möglicher Wärmeabgabe und Betrieb der Reformeranordnung 1 sicherzustellen. Als Wärmequellen sind außerdem Verbrennungskraftmaschinen oder externe Brenner denkbar.

Die Figuren 1a bis 1c verdeutlichen dabei nur beispielhaft Grundkonfigurationen zur Umsetzung der erfindungsgemäßen Gemischbildung bzw. Bereitstellung außerhalb der Gemischbildungszone ohne näher auf die konkrete konstruktive Ausgestaltung der Reformeranordnung 1 einzugehen.

Um insbesondere gemäß Figur 1b und 1c prozessinterne Wärmequellen nutzen zu können, ist ein Anlaufen bzw. eine Startphase erforderlich, welche eine zeitlich begrenzte Zersetzung eines Kohlenwasserstoff/Mischmaterial-Gemisches unter Wärmefreisetzung voraussetzt. Dazu weist die Reformeranordnung 1 eine Eintrittsöffnungsanordnung für Brennstoff, insbesondere Kohlenwasserstoff auf, die im Bereich der Kohlenwasserstoffverdampfungseinrichtung 7 angeordnet ist und somit der Gemischbildungszone 5 vorgeschaltet ist.

Bei den Ausführungen gemäß der Figuren 1a bis 1c ist die Gemischbildungszone 5 in einer Mischkammer, insbesondere einer kombinierten Brenn-/Mischkammer angeordnet, wobei sich in diese ein Zündorgan erstreckt, welches der Zündung des in der Gemischbildungszone 5 vorliegenden Gemisches dient.

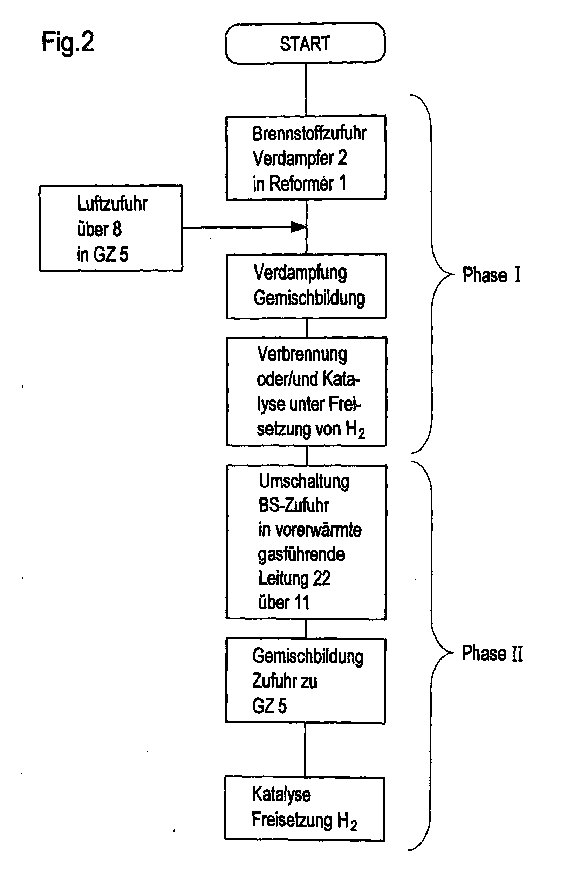

Das erfindungsgemäße Verfahren zum Betreiben der Reformeranordnung 1 ist in Figur 2 anhand eines Signalflußbildes wiedergegeben und gliedert sich in zwei Betriebsphasen, die so genannte Startphase I und die Betriebsphase II. Die Unterteilung in die einzelnen Betriebsphasen I und II ist durch die unterschiedliche Zufuhr des Brennstoffes charakterisiert. In der Startphase I wird flüssiger Brennstoff, insbesondere Kohlenwasserstoff oder kohlenwasserstoffhaltige Flüssigkeit erwärmt und verdampft, wozu dieser über die Eintrittsöffnungsanordnung der Verdampfungsanordnung 2 zugeführt wird und an der Kohlenwasserstoffverdampfungseinrichtung 7 verdampft wird. Dazu wird Brennstoff über eine Brennstoffzufuhr 23 in Form einer Brennstoffzuführleitungs- und Eintrittsanordnung an der Verdampferanordnung 2 an mehreren Umfangsbereichen zum Verdampfermedium geführt, so dass der Brennstoff, beispielsweise in Form von Dieselkraftstoff in das Verdampfermedium in möglichst gleichförmig über den Umfang verteilter Art und Weise eingespeist werden kann. Zusätzlich kann die Verdampferanordnung 2 eine dem Verdampfermedium zugeordnete Heizeinrichtung umfassen, welche in direktem Wärmeübertragungskontakt mit dem Verdampfermedium steht. Bei Aktivierung dieser Heizeinrichtung kann das Verdampfermedium erwärmt werden, so dass die Abdampfung des darin enthaltenen flüssigen Brennstoffes verstärkt bzw. ausgelöst wird. Dieser erzeugte Dampf wird in der Gemischbildungszone 5 mit über die Eintrittsöffnungsanordnung 6 eingebrachter Luft oder Dampf vermischt, welche über die Zufuhrleitung 8 zugeführt wird. Dazu strömt ein Teil der zugeführten Luft in Richtung des Kohlenwasserstoffverdampfers 7 und umströmt das Verdampfermedium, wobei diese im Verdampfermedium bereits vorhandenen abgedampften Brennstoff mitnimmt und die Abdampfung verstärkt sowie die Durchmischung verbessert.

Das Kohlenwasserstoff/Mischmaterial-Gemisch aus verdampften Kohlenwasserstoff und Luft gelangt dann entweder nach erfolgter Zündung mittels Zündorgan und Verbrennung oder direkt in den Katalysator 3, in welchem die Zersetzung des Kohlenwasserstoff/Mischmaterial-Gemisches unter Freigabe von Wasserstoff als Reformat durch eine katalytische. Reaktion erfolgt. Um die erforderlichen Temperaturen in den einzelnen Abschnitten bereitzustellen, kann der Verdampferanordnung 2 und/oder dem Katalysator 3 eine Heizeinrichtung zugeordnet sein oder aber diese Bereiche werden durch geeignete Maßnahmen indirekt durch Abwärme aus anderen Prozessen erwärmt.

Herrschen in der Gas oder/und Dampf führenden Leitung 10 die erforderlichen Prozesstemperaturen zur rückstandslosen Verdampfung vor, wird in der Betriebsphase II die Brennstoffzufuhr zur Verdampferanordnung 2 zumindest teilweise, vorzugsweise vollständig unterbrochen, und der Brennstoff wird nunmehr über die Mittel 11 in die Gas und/oder Dampf führende Leitung 10 oder eine mit dieser gekoppelten Leitung eingebracht und mit dem in dieser Leitung geführtem Gas vermischt, vorzugsweise verdampft und anschließend der Gemischbildungszone 5 zugeführt. In dieser erfolgt dann eine Homogenisierung des bereits in der Gas oder/und Dampf führenden Leitung 10 vorliegenden Kohlenwasserstoff/Mischmaterial-Gemisches.

Da die Umschaltung der Brennstoffzufuhr in Abhängigkeit der in der Gas oder/und Dampf führenden Leitung 10 vorliegenden Temperatur erfolgt, kann diese sehr rasch, d.h. bereits vor der Katalyse bei oder nach der Verbrennung des Gemisches in der Betriebsphase I vorgenommen werden. Die Katalyse unter Freisetzung von H₂ ist dabei auf jeden Fall Bestandteil der Betriebsphase II, bei Ausnutzung prozessinterner Erwärmungsquellen, insbesondere der Abwärme aus dem Verbrennungsvorgang und der Katalyse auch der Betriebsphase I.

Die Figur 2 verdeutlicht dabei lediglich die grundsätzlich erforderlichen Abläufe zum Betreiben einer erfindungsgemäß gestalteten Reformeranordnung 1. Weitere Prozessschritte zur Optimierung des Gesamtprozesses sind denkbar.

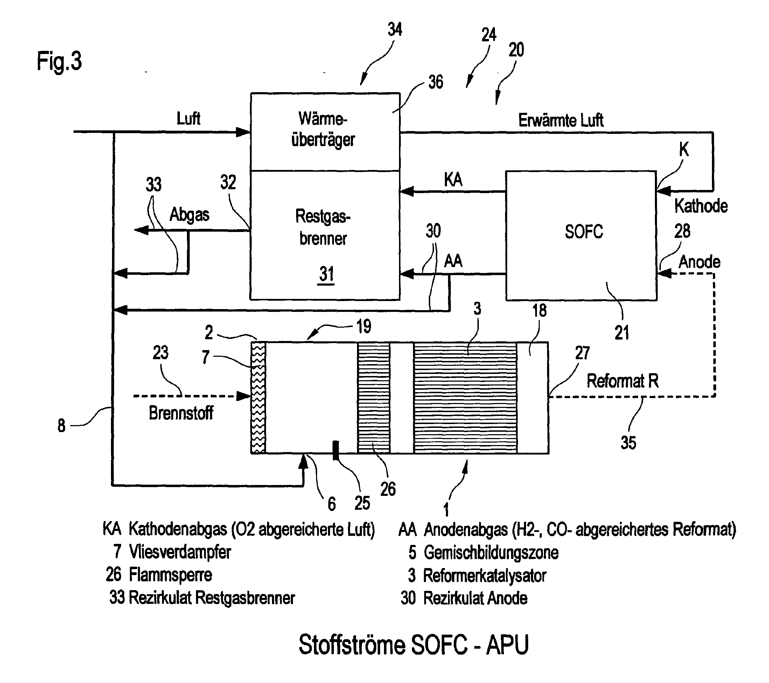

Die Figur 3 verdeutlicht schematisiert die Stoffströme in einem Funktionssystem 24, umfassend ein Wasserstoff verbrauchendes System 20 in Form einer Brennstoffzelle 21 mit Abgasaufbereitungssystem 34. Das System 20 umfasst dazu eine Wasserstoffbereitstellungseinrichtung in Form einer Reformeranordnung 1. Diese ist wie in den Figuren 1a bis 1c beschrieben ausgeführt und umfasst eine Verdampferanordnung 2 zur Erzeugung eines in einem Reformer zur Wasserstoffgewinnung zersetzbaren Kohlenwasserstoff/Mischmaterial-Gemisch, beispielsweise in Form eines Kohlenwasserstoff/Luft- oder/und Wasserdampfgemisches vorliegt und einen Katalysator 3, in welchem das Kohlenwasserstoff/Mischmaterial-Gemisch oder reines Kohlenwasserstoff/Wasser-Gemisch zersetzt wird. Die Verdampferanordnung 2 umfasst einen BrennerNerdampferbereich 19, welcher die Gemischbildungszone 5 aufweist, in welche Luft oder/und Wasserdampf über eine Eintrittsöffnungsanordnung 6 eintritt sowie eine Kohlenwasserstoffverdampfungseinrichtung 7, welche ein poröses Verdampfungsmedium aufweist. Das poröse Verdampfungsmedium wird beispielsweise von Vliesmaterial oder sonstigem Gewebe oder mattenartigem Material, Schaumkeramik gebildet. In den BrennerNerdampferbereich 19 erstreckt sich eine Glühzündeinrichtung 25 mittels welcher das Gemisch gezündet wird und verbrennt und somit die für die katalytische Reaktion erforderlichen Temperaturen bereitgestellt werden können. Das Luftverhältnis beträgt > 1. Stromabwärts der Gemischbildungszone 5 schließt sich eine Flammsperre 26 und an diese der Katalysator 3 an Das aus der Gemischbildungszone 5 austretende und auf den Katalysator 3 zuströmende Gemisch (Luftverhältnis < 1, Reformierung). wird in diesem durch katalytische Reaktion aufgespalten, um ein Wasserstoff enthaltendes Reformat R zu erhalten, welches in einer Brennstoffzelle 21 zur Erzeugung elektrischer Energie weiter verwendet wird. Dazu ist die Reformeranordnung 1, insbesondere eine Austrittsöffnungsanordnung 27 für Reformat über eine Reformat führende Leitung 35 mit der Brennstoffzelle 21, insbesondere der Anode als Eintrittsanordnung 28 für Reformat R an der Brennstoffzelle 21 verbunden. In der Brennstoffzelle 21 wird das Reformat R unter Erzeugung elektrischer Energie umgesetzt, wobei die die Brennstoffzelle 21 verlassenden Anodenabgase AA, welche auch als Restreformat bezeichnet werden, noch einen bestimmten Restwasserstoffanteil enthalten können. Diese werden in einer Anodenabgas AA führenden Leitung 30 geführt. Ferner liegt Kathodenabgas KA vor. Um das System effizient zu betreiben, ist daher vorgesehen, die Abgase AA und KA in eine Brenneranordnung 31 in Form eines Restgasbrenners einzuleiten, wo diese verbrannt werden. Die dabei entstehende Wärme kann in einer Wärmetauscheranordnung 36 aufgenommen werden. Die Abgase A aus der Brenneranordnung werden in einer Abgasleitung 33 geführt, welche mit einer Austrittsöffnungsanordnung 32 an der Brenneranordnung 31 verbunden ist.

Die Luftzufuhr zur Eintrittsöffnungsanordnung 6 erfolgt über eine Zufuhrleitung 8. Ein Teil des in dieser geführten Gases wird über den Wärmetauscher 36 geleitet und erwärmt der Brennstoffzelle 21 zugeführt, insbesondere der Kathode K. Ferner erkennbar ist, dass ein Teil der Abgase als Rezirkulat von der Anodenabgas AA führenden Leitung 30 und / oder der Abgasleitung 33 als Rezirkulat in die Zufuhrleitung 8 für Luft oder/und Wasserdampf eingespeist werden können und somit der Reformeranordnung 1 erneut zuführbar sind, d.h. in einem Kreislauf geführt werden können.

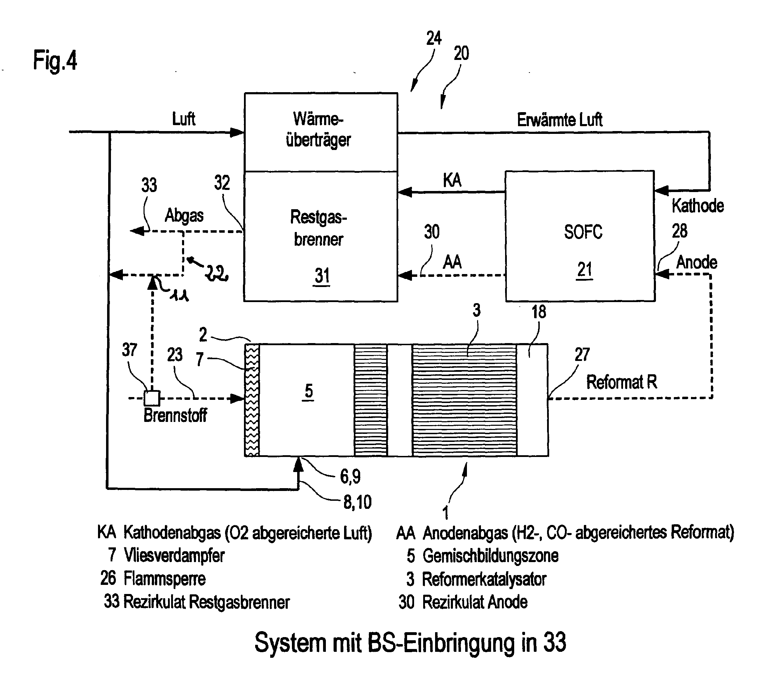

Erfindungsgemäß ist es nunmehr vorgesehen, wenigstens einen Teil des Brennstoffes, vorzugsweise den gesamten Brennstoff, vorerwärmt durch einmischmaterial, vorzugsweise Luft und Rezirkulat, insbesondere Abgas vorgemischt in die Reformeranordnung 1, insbesondere die Gemischbildungszone 5 einzuleiten. Dazu bestehen mehrere Möglichkeiten, die im Wesentlichen durch die Nutzung ohnehin vorhandener Leitungen und Leitungssysteme charakterisiert sind. Diese Möglichkeiten sind beispielhaft in den Figuren 4 bis 7 wiedergegeben. Dabei beschreiben die Figuren 4 bis 6 Möglichkeiten gemäß Figur 1c.

Figur 4 verdeutlicht dabei anhand einer Ausführung gemäß Figur 3 die Möglichkeit der Nutzung einer vorerwämtes Gas oder Dampf führenden Leitung 10 in Form der Abgasleitung 33 zur Einbringung von Brennstoff und Gemischbildung mit dem in dieser Leitung geführten Gas, hier insbesondere ein Teil des den Restgasbrenner verlassenden Abgases A. Dazu wird Brennstoff aus der Brennstoffzufuhr 23 in die Abgasleitung 33, insbesondere den Teil, welcher mit der Zufuhrleitung 8 gekoppelt ist, über die Mittel 11 eingespeist und verdampft. Die Zufuhrleitung 8, welche mit der Abgasleitung 33 gekoppelt ist fungiert dabei als Gas oder/und Dampf führende Leitung 10, welche mit der Eintrittsöffnungsanordnung 6, die die Eintrittsöffnungsanordnung 9 bildet, verbunden ist und das in der Abgasleitung 33 gebildete Kohlenwasserstoff/Mischmaterial-Gemisch in die Gemischbildungszone 5 einleitet.

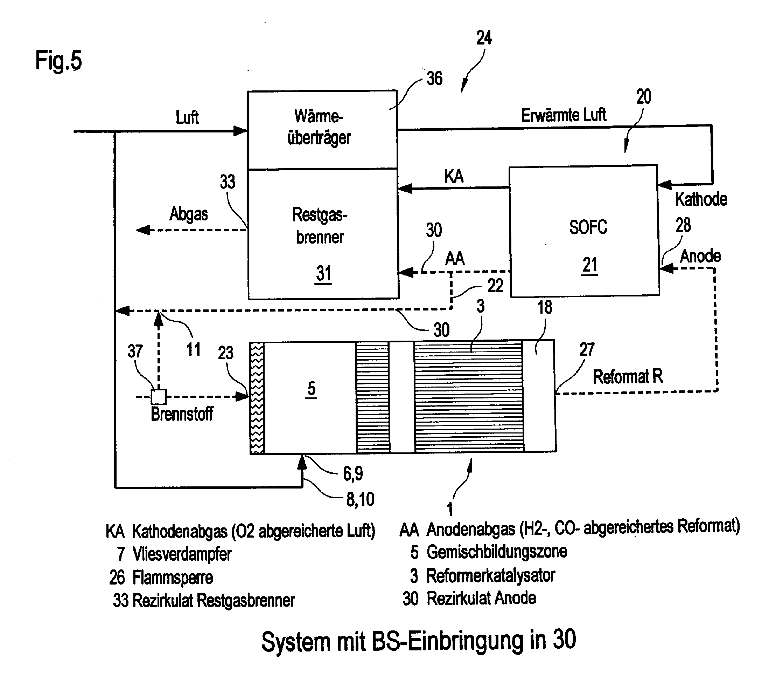

Gemäß Figur 4 wird das Anodenabgas AA vollständig der Brenneranordnung 31 zugeführt und in dieser verbrannt. Eine Zufuhr von Rezirkulat aus dem Anodenabgas AA in die Reformeranordnung 1 erfolgt hier nicht, wäre jedoch ebenfalls zusätzlich denkbar. Eine Möglichkeit der Einbringung von Brennstoff in das Rezirkulat Anodenabgas AA zeigt Figur 5 in schematisierter Darstellung. Dazu ist die Anodenabgas AA führende Leitung 30 als vorerwämtes Gas führende Leitung 22 gemäß Figur 1c ausgeführt und mit der Zufuhrleitung 8 für Luft oder/und Wasserdampf verbunden. Ein Teil des Anodenabgases AA wird der Brenneranordnung 31 und ein weiterer Teil als Rezirkulat der Reformeranordnung 1 über die Zufuhrleitung 8 wieder zugeführt. Dabei wird Brennstoff aus der Brennstoffzufuhr 23 in die Anodenabgas AA führende Leitung 30 über Mittel 11 eingebracht und bildet unter den genannten Prozessbedingungen ein Kohlenwasserstoff/Mischmaterial-Gemisch, wobei als Mischmaterial hier das Anodenabgas AA fungiert. Dieses Gemisch wird in die Zufuhrleitung 8 als Gas oder/und Dampf führende Leitung 10 eingeleitet und mit der dort geführten Luft vermischt und der Gemischbildungszone 5 zugeführt.

Im Funktionssystem 24 gemäß Figur 5 wurde auf eine Einbringung von Abgas aus der Abgasleitung 33 verzichtet. Wie bereits ausgeführt besteht jedoch auch hier die Möglichkeit, diese Option zusätzlich vorzusehen.

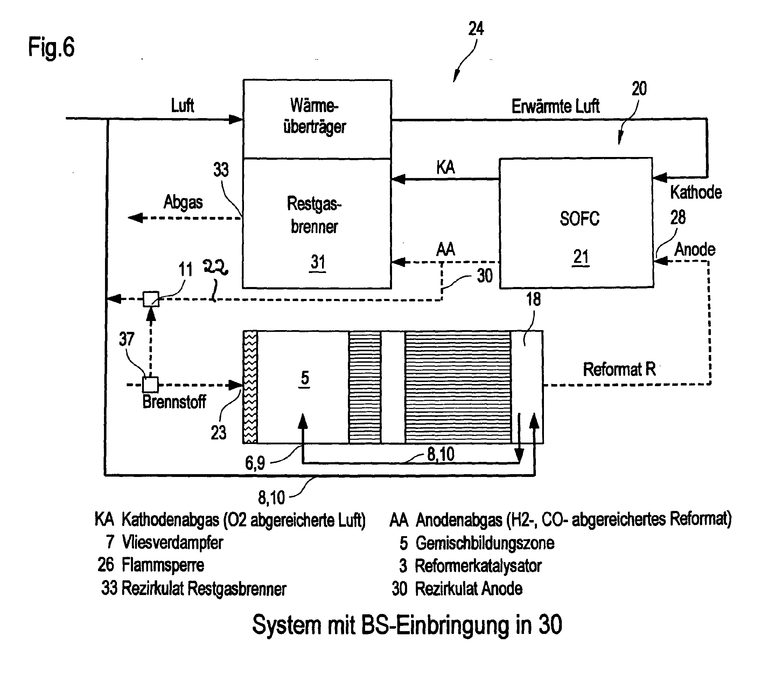

Figur 6 verdeutlicht eine Weiterentwicklung gemäß Figur 5. Bei dieser wird zusätzlich das über die Zufuhrleitung 8 geführte Kohlenwasserstoff/Mischmaterial-Gemisch aus der mit der Zufuhrleitung 8 gekoppelten Anodenabgas führenden Leitung 30 und dem in der Zufuhrleitung 8 geführten Gas über die Wärmeübertragungseinheit 18 der Reformeranordnung 1 geführt und vor Eintritt in die Gemischbildungszone 5 erwärmt.
Die Brennstoffzufuhr erfolgt in die Anodenabgas AA führende Leitung 22.

Bei den in den Figuren 4 bis 6 dargestellten Ausführungen wird die ohnehin vorhandene Brennstoffzufuhr 23 zur Reformeranordnung 1 genutzt und lediglich durch Umschaltung über beispielsweise ein Umschaltventil 37 mit der jeweiligen vorerwärmtes Gas führenden Leitung 22 des Funktionssystems 24 verbunden, wobei dieser dann Mittel 11 zur Einbringung von Brennstoff zugeordnet sind.

Bei den in den Figuren 4 bis 6 dargestellten Ausführungen sind die Mittel 11 zur Einbringung des Brennstoffes entweder direkt der vorerwämtes Gas führenden Leitung 22 zugeordnet oder aber der Zufuhrleitung 8 nach der Mündung der vorerwärmtes Gas führenden Leitung 22 in diese, so dass die Einbringung des Kraftstoffes bereits in das Gemisch aus Rezirkulat und Luft erfolgt.

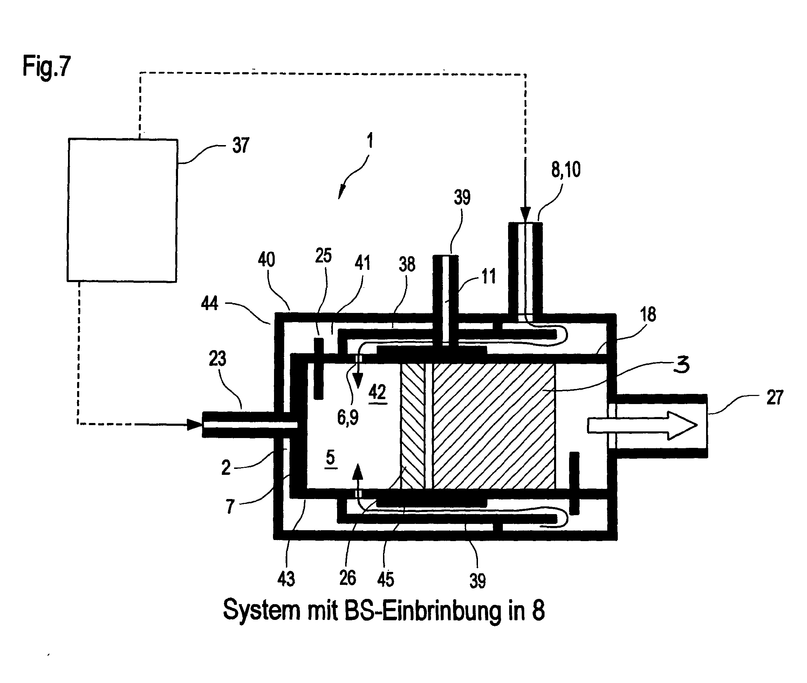

Figur 7 verdeutlicht anhand eines Axialschnittes durch eine Reformeranordnung 1 eine konstruktive Ausführung gemäß Figur 6 in Kompaktbauweise. Dazu umfasst die Reformeranordnung 1 ein röhrenförmiges Element 40, welches doppelwandig unter Bildung zweier Hohlräume 41, 42 ausgeführt ist. Diese sind vorzugsweise zylindrisch ausgeführt. Der Hohlraum 42 ist dabei mit einer Brennstoffzufuhr 23 verbunden. Die diesen umschließende Wand 43 in Form eines Innenmantels trägt die Verdampfereinrichtung 2, welche beispielsweise als Vliesverdampfer ausgeführt ist. Der Hohlraum 42 bildet ferner die Gemischbildungszone 5, welche dem Verdampfer nachgeordnet ist. An der diesen umschließenden Wand 43 sind die Flammsperre 26 sowie der Katalysator 3 gelagert. Ferner dargestellt ist die Austrittsöffnungsanordnung 27 für das Reformat R.

Die Zufuhrleitung 8 mündet an der Außenwand bzw. den Außenmantel 44 des röhrenförmigen Elementes und umströmt in einem zwischen Außenmantel und Innenmantel gebildeten ringförmigen Hohlraum 41 die den Innenmantel bildende innere Wand 43 der Reformeranordnung 1 und mündet in diese durchdringende Durchgangsöffnungen der Eintrittsöffnungsanordnung 6. Die Durchgangsöffnungen der Eintrittsöffnungsanordnung 6 sind über dem Umfang des Innenmantels vorzugsweise mit gleichmäßigen Abständen zueinander angeordnet. Erfindungsgemäß bildet die Zufuhrleitung 8 auch die Leitung 10 zur Führung von Gas oder/und Dampf, d.h. in diese wird auch das Rezirkulat aus der vorerwärmtes Gas führenden Leitung 22, insbesondere der Anodenabgas AA führenden Leitung 30 eingeleitet. Die Eintrittsöffnungsanordnung 6 fungiert somit auch als Eintrittsöffnungsanordnung 9 für das in der Gas oder/und Dampf führenden Leitung 10 geführte Gemisch. In dieses Gemisch aus Luft und Rezirkulat wird ferner zum erfindungsgemäßen Betrieb Brennstoff über die Mittel 11, hier eine Brennstoffzufuhrleitung 39, welche mit einer Verdampferanordnung 45 gekoppelt ist, die in der Zufuhrleitung 8 angeordnet ist , eingebracht und in der Zufuhrleitung 8 verdampft und mit dem Gemisch aus Luft und/oder Rezirkulat vermischt. Das so entstandene Gemisch wird der Eintrittsöffnungsanordnung 6 zugeführt.

Zur Verdampfung des in das Gemisch aus Rezirkulat und Luft einzuleitenden Brennstoffes umfasst die Verdampferanordnung 45 einen auf dem Innenmantel angeordneten Vliesverdampfer, umfassend ein Vlies, welches über den gesamten Umfang am Außenumfang des Innenmantels aufgebracht ist. Die Einbringung des Brennstoffes sollte dabei möglichst ebenfalls gleichmäßig über den Umfang verteilt auf das Vlieserfolgen. Zur Vermeidung des Auskondensierens von Brennstoff an kalten Wänden ist ein Strahlungsblech 38 vorgesehen, welches den Einbringbereich für Brennstoff gegenüber den Innenwänden des Außenmantels abschirmt. Ein externes Umschaltventil 37 für Brennstoff ermöglicht das Umschalten des Kraftstoffes auf die Brenneranordnung des Reformers oder die externe Kraftstoffzudosierung.

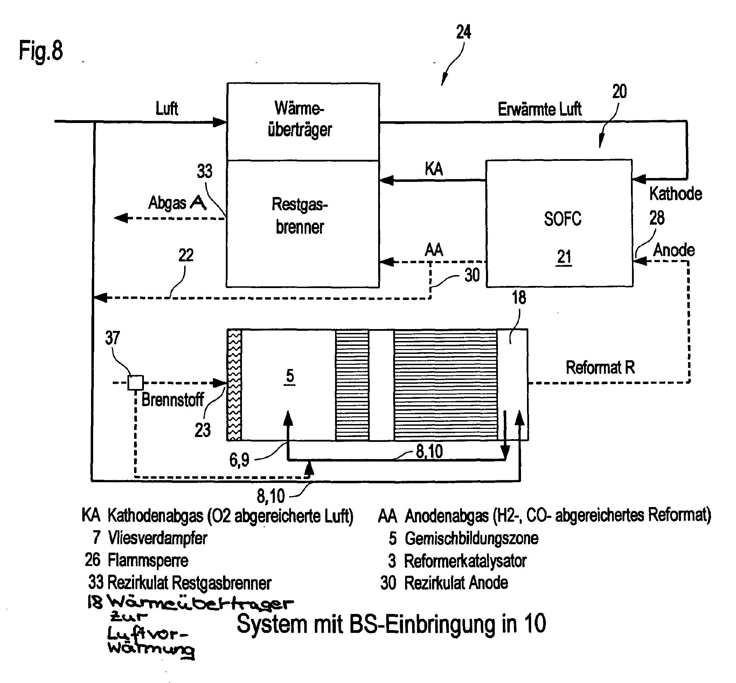

Figur 8 verdeutlicht anhand einer Ausführung gemäß Figur 6 die Brennstoffzufuhr in die Gas oder/und Dampf führende Leitung 10 nach Durchlaufen oder Wirkverbindung mit der Wärmeübertragungseinheit 18. Die Einspritzung bzw. Zudosierung erfolgt hier nicht in die Anodenabgas AA führende Leitung 30 vor der Reformeranordnung sondern nach Koppelung dieser an die Zufuhrleitung 8 und Wirkverbindung mit der Wärmeübertragungseinheit 18 in den diese mit der Gemischbildungszone 5 verbindenden Leitungsabschnitt.

Eine weitere Ausführung stellt die Anordnung eines zusätzlichen Zündorgans außerhalb der Reformeranordnung beispielsweise in der Anodenabgas führenden Leitung 30 vor den Mitteln 11 zur Einbringung in Figur 6 dar. Wird in diese Leitung 30 ein Zündorgan eingebracht, so kann das Anodenabgas, das ja auch noch eine Restmenge H₂ enthält in sauerstoffhaltiger Atmosphäre wie Luft, verbrannt werden. Anstelle des Anodenabgases wird dann das sich hieraus ergebende warme Verbrennungsgas zur Erwärmung des Brennstoffes genutzt. Das Verbrennungsgas wird dazu genutzt die während des Starts zu großen Wärmeverluste zu kompensieren.
Eine weitere Ausführung stellt die Anordnung eines zusätzlichen Zündorgans nach dem Mittel 11 zur Einbringung des Brennstoffes dar. Es kann dann das gesamte Eduktgasgemisch (Brennstoff und beispielsweise Anodenabgas) verbrannt werden, um bspw. den Außenbereich des Reformers aufzuwärmen.

### Bezugszeichenliste

- 1: Reformeranordnung
- 2: Verdampferanordnung
- 3: Katalysator
- 4: Verdampferbereich
- 5: Gemischbildungszone
- 6: Eintrittsanordnung
- 7: Kohlenwasserstoffverdampfereinrichtung
- 8: Zufuhrleitung für Luft
- 9: Eintrittsanordnung für Kohlenwasserstoff/Mischmaterial-Gemisch
- 10: Gas oder/und Dampf führende Leitung
- 11: Mittel zur Einbringung von Brennstoff
- 12: Einspritzdüse
- 13: Verdampferanordnung
- 14: Mittel zur wahlweisen Koppelung der Zufuhrleitung 8 oder der Leitung 10 an die Eintrittsanordnung 6
- 15: Umschaltventil
- 16: Vorwärmeinrichtung
- 17: Externe Wärmequelle
- 18: Wärmeübertragungseinheit
- 19: Brenner/Verdampferbereich
- 20: Wasserstoff verbrauchendes System
- 21: Brennstoffzellensystem
- 22: erwärmtes Abgas führende Leitung
- 23: Brennstoffzufuhr
- 24: Funktionssystem
- 25: Glühzündanordnung
- 26: Flammsperre
- 27: Austrittsanordnung für Reformat
- 28: Eintrittsanordnung für Reformat am Wasserstoff verbrauchenden System
- 29: Austrittsanordnung für Abgas aus Wasserstoff verbrauchendem System
- 30: Anodenabgas führende Leitung
- 31: Brenneranordnung
- 32: Austrittsöffnung für Abgas
- 33: Abgasleitung
- 34: Abgasaufbereitungssystem
- 35: Reformat führende Leitung
- 36: Wärmetauscher
- 37: Umschaltventil
- 38: Strahlungsblech
- 39: Brennstoffzufuhrleitung.
- 40: rohrförmiges Element
- 41: Hohlraum
- 42: Hohlraum
- 43: Wand
- 44: Wand
- 45: Verdampferanordnung

## Patentansprüche

1. Reformeranordnung (1) zur Erzeugung von Wasserstoff aus einem Kohlenwasserstoff/Mischmaterial-Gemisch
1.1 mit einer Gemischbildungszone (5);
**gekennzeichnet durch** die folgenden Merkmale:
1.2 die Gemischbildungszone (5) umfasst eine Eintrittsöffnungsanordnung (9) für ein Kohlenwasserstoff/Mischmaterial-Gemisch;
1.3 die Eintrittsöffnungsanordnung (9) für das Kohlenwasserstoff/Mischmaterial-Gemisch ist mit wenigstens einer erwärmtes Gas oder/und Dampf führenden Leitung (10) verbindbar;
1.4 der erwärmtes Gas oder/und Dampf führenden Leitung (10) sind Mittel (11) zur Einbringung von Brennstoff in Form von flüssigem Kohlenwasserstoff oder einer kohlenwasserstoffhaltigen Flüssigkeit außerhalb der Gemischbildungszone (5) zugeordnet.

2. Reformeranordnung (5) nach Anspruch 1, **dadurch gekennzeichnet, dass** die
Mittel (11) zur Einbringung von Brennstoff in die erwärmtes Gas oder/und Dampf führende Leitung (10) eine der nachfolgend genannten Einrichtungen umfassen:
- eine Einspritz- bzw. Zerstäuberdüse
- einen Ultraschallzerstäuber
- eine Einstoffdüse
- eine Zweistoffdüse
- einen Rotationszerstäuber
- einen elektrostatischen Zerstäuber
- einen Mikrowellenzerstäuber
- eine Brennstofffördereinheit
- ein Absperrventil für Brennstoff
- ein Rückschlagventil für Brennstoff
- komponentenverbindende Leitungen

3. Reformeranordnung (5) nach Anspruch 1, **dadurch gekennzeichnet, dass** die Mittel (11) zur Einbringung von Brennstoff in die erwärmtes Gas oder/und Dampf führende Leitung (10) mindestens eine Dosier-, Absperr- und Fördereinheit, insbesondere eine Dosierpumpe und einen in der erwärmtes Gas oder/und Dampf führenden Leitung (10) angeordneten Verdampfer umfassen.

4. Reformeranordnung (1) nach einem der Ansprüche 1 bis 3, **gekennzeichnet durch** die folgenden Merkmale:
4.1 mit einer Verdampferanordnung (2) zur Erzeugung eines Kohlenwasserstoff/Mischmaterial-Gemisches, umfassend
- eine Kohlenwasserstoffverdampfungseinrichtung (7), umfassend mindestens ein poröses Verdampfungsmedium und
- die Gemischbildungszone (5);
4.2 die Gemischbildungszone (5) umfasst eine Eintrittsöffnungsanordnung (6) für ein Mischmaterial in Form von Luft oder/und Wasserdampf, die mit mindestens einer Zufuhrleitung (8) für Luft oder/und Wasserdampf verbindbar ist;
4.3 mit einer der Verdampferanordnung (2) zugeordneten
Eintrittsöffnungsanordnung für Brennstoff aus einer Brennstoffzufuhr (23).

5. Reformeranordnung (1) nach Anspruch 4, **dadurch gekennzeichnet, dass** die Eintrittsöffnungsanordnung (9) für das Kohlenwasserstoff/Mischmaterial-Gemisch von der Eintrittsöffnungsanordnung (6) für Mischmaterial in Form von Luft oder/und Wasserdampf gebildet wird.

6. Reformeranordnung (1) nach Anspruch 5, **dadurch gekennzeichnet, dass** zwischen der Eintrittsöffnungsanordnung (9), der Zufuhrleitung (8) für Luft oder/und Wasserdampf und der erwärmtes Gas oder/und Dampf führenden Leitung (10) Mittel (14) zur wenigstens wahlweisen Koppelung der Gas oder/und Dampf führenden Leitung (10) und der Zufuhrleitung (8) für Luft oder/und Wasserdampf mit der Eintrittsöffnungsanordnung (9) angeordnet sind.

7. Reformeranordnung (1) nach Anspruch 6, **dadurch gekennzeichnet, dass** die Mittel (14) zur wenigstens wahlweisen Koppelung der erwärmtes Gas oder/und Dampf führenden Leitung (10) oder der Zufuhrleitung (8) für Luft oder/und Wasserdampf mit der Eintrittsöffnungsanordnung (9) wenigstens eine Ventilanordnung umfassen.

8. Reformeranordnung (1) nach einem der Ansprüche 4 bis 7, **dadurch gekennzeichnet, dass** die erwärmtes Gas oder/und Dampf führende Leitung (10) und die Zufuhrleitung (8) für Luft oder/und Wasserdampf von einer Leitung gebildet werden.

9. Reformeranordnung (1) nach einem der Ansprüche 4 bis 8, **dadurch gekennzeichnet, dass** Mittel (11) zur Einbringung von Brennstoff in Form von flüssigem Kohlenwasserstoff oder einer kohlenwasserstoffhaltigen Flüssigkeit
mit der Brennstoffzufuhr (23) koppelbar ist.

10. Reformeranordnung (1) nach einem der Ansprüche 1 bis 9, **dadurch gekennzeichnet, dass** der erwärmtes Gas oder/und Dampf führenden Leitung (10) eine Vorwärmeinrichtung (16) zugeordnet ist.

11. Reformeranordnung (1) nach Anspruch 10, **dadurch gekennzeichnet, dass** die
Vorwärmeinrichtung (16) eine externe Heizquelle in Form einer außerhalb der Reformeranordnung (1) angeordneten Heizquelle umfasst.

12. Reformeranordnung (1) nach Anspruch 10, **dadurch gekennzeichnet, dass** die
Vorwärmeinrichtung (16) eine in der Reformeranordnung (1) angeordnete Heizquelle umfasst.

13. Reformeranordnung (1) nach Anspruch 12, **dadurch gekennzeichnet, dass** diese eine Wärmeübertragungseinheit (18) umfasst und die Vorwärmeinrichtung (16) von der Wärmeübertragungseinheit (18) gebildet wird, wobei die erwärmtes Gas oder/und Dampf führende Leitung (10) oder/und Luft oder/und Wasserdampf führende Leitung und Kohlenwasserstoff/Mischmaterial-Gemisch führende Leitung über die Wärmeübertragungseinheit (18) mit der Gemischbildungszone (5) verbunden ist.

14. Reformeranordnung (1) nach Anspruch 13, **dadurch gekennzeichnet, dass** die
Mittel (11) zur Einbringung von Brennstoff der erwärmtes Gas oder/und Dampf führenden Leitung (10) zwischen Wärmeübertragungseinheit (18) und Eintrittsöffnungsanordnung (9) für das Kohlenwasserstoff/Mischmaterial-Gemisch an der Gemischbildungszone (5) zugeordnet sind.

15. Reformeranordnung (1) nach einem in der Ansprüche 1 bis 14, **dadurch gekennzeichnet, dass** die erwärmtes Gas oder/und Dampf führende Leitung (10) mit Gas oder/und Dampf führenden Leitungen externer Systeme oder eines mit der Reformeranordnung (1) verbundenen Wasserstoff verbrauchenden Systems, insbesondere Brennstoffzellensystems (21) und/oder einem Restgasbrenner oder/ und mit der Abgasanlage einer Verbrennungskraftmaschine verbindbar ist oder von diesen gebildet wird.

16. Reformeranordnung (1) nach einem der Ansprüche 1 bis 15, **dadurch gekennzeichnet, dass** diese einen stromabwärts der Gemischbildungszone (5) angeordneten Katalysator (3) zur Zersetzung des Kohlenwasserstoff/Mischmaterial-Gemisches umfasst.

17. Reformeranordnung (1) nach einem der Ansprüche 1 bis 16,
**gekennzeichnet**
**durch** die folgenden Merkmale:
17.1 mit einer Glühzündanordnung (25) zum Zünden von in der Gemischbildungszone (5) vorhandenem Kohlenwasserstoff/Mischmaterial-Gemisch;
17.2 mit einer der Glühzündanordnung (25) nachgeordneten Flammsperre (26).

18. Reformeranordnung (1) nach einem der Ansprüche 16 oder 17, **dadurch gekennzeichnet, dass** der Katalysator (3) der Flammsperre (26) nachgeordnet ist.

19. Reformeranordnung (1) nach einem der Ansprüche 1 bis 18, **dadurch gekennzeichnet, dass** diese eine dem Katalysator (3) nachgeordnete Austrittsöffnungsanordnung (27) für das aus der Katalyse entstandene Reformat aufweist.

20. Reformeranordnung (1) nach einem der Ansprüche 1 bis 18, **dadurch gekennzeichnet, dass** Verdampferanordnung (2), Gemischbildungszone (5) und Katalysator (3) in einem rohrförmigen Element (40) angeordnet sind.

21. Reformeranordnung (1) nach Anspruch 20, **gekennzeichnet durch** die folgenden Merkmale:
21.1 umfassend zwei hohlzylindrische Elemente, die unter Bildung zweier Hohlräume (41, 42) - einen ersten Hohlraum (41) und einen zweiten, die Verdampferanordnung (2), Gemischbildungszone (5) und Katalysator (3) aufnehmenden Hohlraum (42);
21.2 im Hohlraum (42) ist mit einer Brennstoffzufuhr (23) verbunden;
21.3 mit einem gemeinsamen Anschluss für die Zufuhrleitung (8) für Gas oder/und Wasserdampf und die Gas oder/und Dampf führende Leitung (10), der über den ersten Hohlraum (41) mit dem zweiten Hohlraum (42) verbunden ist;
21.4 die Mittel (11) zur Einbringung von Brennstoff umfassen eine zweite Brennstoffzufuhr (39), die mit dem erwärmtes Gas führenden Bereich im ersten Hohlraum (41) verbunden ist.

22. Reformeranordnung (1) nach Anspruch 21, **dadurch gekennzeichnet, dass** die erste und die zweite Brennstoffzufuhr (23, 39) über eine Umschalteinrichtung jeweils allein oder gemeinsam mit einer Brennstoffquelle koppelbar sind.

23. Funktionssystem (24)
23.1 mit einer Reformeranordnung (1) gemäß einem der Ansprüche 1 bis 21;
23.2 mit einem mit der Reformeranordnung (1) verbundenen Wasserstoff verbrauchenden System (20).

24. Funktionssystem (24) nach Anspruch 23, **dadurch gekennzeichnet, dass** das
Wasserstoff verbrauchende System (20) von einer Brennstoffzelle (21) und/oder einem Restgasbrenner oder einem Abgassystem beispielsweise einer Verbrennungskraftmaschine gebildet wird.

25. Funktionssystem (24) nach Anspruch 24, **gekennzeichnet durch** die folgenden
Merkmale:
25.1 die Austrittsöffnungsanordnung (27) für Reformat an der Reformeranordnung (1) ist mit der Brennstoffzelle (21) verbunden;
25.2 die Brennstoffzelle (21) umfasst eine Austrittsöffnungsanordnung (29) für ein Rezirkulat in Form von Anodenabgas (AA), welche mit wenigstens einer Leitung (30) zur Führung des Anodenabgases (AA) verbunden ist.

26. Funktionssystem (24) nach Anspruch 25, **dadurch gekennzeichnet, dass** die Leitung (30) zur Führung des Anodenabgases (AA) mit der erwärmtes Gas oder/und Dampf führenden Leitung (10) verbindbar ist.

27. Funktionssystem (24) nach Anspruch 25 oder 26, **dadurch gekennzeichnet, dass** die Leitung (30) zur Führung des Anodenabgases (AA) mit der die erwärmtes Gas oder/und Dampf führende Leitung (10) bildenden Zufuhrleitung (8) für Luft oder Wasserdampf verbunden ist.

28. Funktionssystem (24) nach einem der Ansprüche 25 bis 27, **dadurch gekennzeichnet, dass** die Mittel (11) zur Einbringung von Brennstoff der Leitung (30) zur Führung des Anodenabgases (AA) zugeordnet sind.

29. Funktionssystem (24) nach einem der Ansprüche 25 bis 28, **dadurch gekennzeichnet, dass** der Brennstoffzelle (21) eine Brenneranordnung (31) nachgeordnet ist, welche mit der Leitung (30) zur Führung des Anodenabgases (AA) koppelbar ist und die eine Austrittsöffnungsanordnung (32) zur Koppelung mit einer Abgasleitung (33) umfasst.

30. Funktionssystem (24) nach Anspruch 29, **dadurch gekennzeichnet, dass** die Abgasleitung (33) mit der erwärmtes Gas oder/und Dampf führenden Leitung (10) verbindbar ist.

31. Funktionssystem (24) nach Anspruch 29 oder 30, **dadurch gekennzeichnet, dass** die Abgasleitung (33) mit der die erwärmtes Gas oder/und Dampf führende Leitung (10) bildenden Zufuhrleitung (8) für Luft oder Wasserdampf verbunden ist.

32. Funktionssystem (24) nach einem der Ansprüche 29 bis 31, **dadurch gekennzeichnet, dass** die Mittel (11) zur Einbringung von Brennstoff der Abgasleitung (33) zugeordnet sind.

33. Funktionssystem (24) nach einem der Ansprüche 23 bis 31, **dadurch gekennzeichnet, dass** die Mittel (11) zur Einbringung des Brennstoffes der Zufuhrleitung (8) für Luft oder Wasserdampf zugeordnet sind.

34. Funktionssystem (24) nach einem der Ansprüche 23 bis 33, **dadurch gekennzeichnet, dass** vor den Mitteln (11) zum Einbringen von Brennstoff ein zusätzliches Zündorgan angeordnet ist

35. Funktionssystem (24) nach einem der Ansprüche 23 bis 34, **dadurch gekennzeichnet, dass** nach den Mitteln (11) zum Einbringen von Brennstoff ein zusätzliches Zündorgan angeordnet ist.

36. Verfahren zum Betreiben einer Reformeranordnung (1) gemäß einem der Ansprüche 1 bis 35, **gekennzeichnet durch** die folgenden Merkmale:
36.1 bei welchem während einer ersten Betriebsphase (I) Brennstoff in die Verdampferanordnung (2) eingebracht und verdampft wird, wobei über die Zufuhrleitung (8) Luft in die Gemischbildungszone (5) eingebracht wird und mit dem verdampften Brennstoff unter Bildung eines Kohlenwasserstoff/Mischmaterial-Gemisches verbrannt wird,
36.2 bei welchem in einer zweiten Betriebsphase (II) die Brennstoffzufuhr zur Verdampferanordnung (2) wenigstens teilweise, vorzugsweise vollständig abgebrochen wird und der Brennstoff in die erwärmtes Gas oder/und Dampf führende Leitung (10) eingebracht wird und mit dem in dieser geführtem Gas ein Kohlenwasserstoff/Mischmaterial-Gemisch bildet und das Kohlenwasserstoff/Mischmaterial-Gemisch der Gemischbildungszone (5) zugeführt wird.

37. Verfahren nach Anspruch 36, **dadurch gekennzeichnet, dass** der Brennstoff eingesprüht oder zudosiert oder zerstäubt wird.

38. Verfahren nach Anspruch 36 oder 37, **dadurch gekennzeichnet, dass** der Brennstoff über eine Fördereinheit, insbesondere Dosierpumpe einer in der erwärmtes Gas oder/und Dampf führenden Leitung angeordnete Verdampferanordnung zugeführt wird und verdampft wird.

39. Verfahren nach einem der Ansprüche 36 bis 37 in einem Funktionssystem (24) gemäß einem der Ansprüche 23 bis 33, **dadurch gekennzeichnet, dass** die Einbringung von Brennstoff in eine Rezirkulat führende Leitung des Funktionssystems (24) erfolgt, welche mit der Gemischbildungszone (5) wenigstens mittelbar verbunden ist.
